# EUROPÄISCHE PATENTSCHRIFT

(11) **EP 0 995 051 B1**
(45) Veröffentlichungstag und Bekanntmachung des Hinweises auf die Patenterteilung: **10.10.2001**
(21) Anmeldenummer: 98942522.8
(22) Anmeldetag: 08.07.1998
(51) Int. Cl.: F16F 1/00

(54) **VERFAHREN ZUR ANSTEUERUNG EINES AGGREGATELAGERS**
METHOD FOR CONTROLLING AN ENGINE SUPPORT
PROCEDE DE COMMANDE D'UN SUPPORT DE GROUPE

(30) Priorität: 12.07.1997 DE 19729980
(43) Veröffentlichungstag der Anmeldung: 26.04.2000
(73) Patentinhaber: Bayerische Motoren Werke Aktiengesellschaft, 80809 München (DE)
(72) Erfinder: RÖTSCH, Karl, D-85229 Markt Indersdorf (DE); POLLHAMMER, Rainer, A-4040 Linz (AT); PETERS, Norbert, D-80995 München (DE); SCHRAMM, Felix, D-81737 München (DE); KÄFER, Thomas, D-86789 Wiedergeltingen (DE); LÖSCHNER, Steffen, D-82140 Olching (DE); FLECHTNER, Horst, D-85748 Garching (DE); HELTMANN, Hans, D-86845 Grossaitingen (DE); HORNE, William, Mark, Coventry CV3 1FW (GB)
(86) Internationale Anmeldenummer: EP9804215
(87) Internationale Veröffentlichungsnummer: WO9902886

(56) Entgegenhaltungen:
- EP-A- 0 559 162
- DE-A- 4 021 039
- DE-A- 4 233 212
- FR-A- 2 660 386
- US-A- 3 483 951
- US-A- 4 921 272
- US-A- 5 628 499

## Beschreibung

Die Erfindung bezieht sich auf ein Verfahren zur Ansteuerung eines Aggregatelagers nach dem Oberbegriff des Anspruchs 1. Ein derartiges Verfahren ist aus der US-A-5 628 499 bekannt.

Aus der DE 40 21 039 C2 ist ein hydraulisch dämpfendes Aggregatelager für eine Brennkraftmaschine bekannt. Das Lager ist so ausgelegt, daß Schwingungen der Brennkraftmaschine, die aus den Gas- und Massenkräften resultieren, von der Karosserie des Fahrzeugs entkoppelt sind. Bei niederfrequenten Relativbewegungen des Aggregates gegenüber der Karosserie wird im Lager ein Überströmmechanismus wirksam, der die beiden Flüssigkeitskammern des Aggregatelagers miteinander verbindet und durch die Reibungsverluste der überströmenden Flüssigkeit eine zusätzliche Dämpfung dieser Schwingungen bewirkt.

Aufgabe der Erfindung ist es, ein Verfahren zur Ansteuerung eines Aggregatelagers bereitzustellen, mit dem niederfrequenten Eigenschwingungen des Aggregates gezielt und wirkungsvoll entgegengewirkt werden kann, ohne dabei das Verhalten bei höherfrequenter Anregung negativ zu beeinflussen.

Diese Aufgabe wird durch die Merkmale des Anspruchs 1 gelöst. Kerngedanke ist es hierbei, ein Einschwingen der niederfrequenten Eigenschwingung des Aggregates durch eine schnell erfolgende Verstimmung des Aggregatelagers zu verhindern. Während gemäß dem Stand der Technik niederfrequente Eigenschwingungen des Aggregates als solche bedämpft werden, sieht das erfindungsgemäße Verfahren die Erzeugung gezielter "Störimpulse" vor, die dem Entstehen einer Eigenschwingung des Aggregates entgegenwirken. Besonders wirkungsvoll ist der Einsatz derartiger Störimpulse in der Anfangsphase einer einsetzenden Eigenschwingung des Aggregates.
Die Zeitdauer der Störimpulse ist auf höchstens ein Fünftel der Schwingdauer der Eigenschwingung des Aggregates begrenzt. Bevorzugt beträgt die Impulsdauer ca. ein Zehntel der Schwingdauer der Eigenschwingung, um die akustischen Eigenschaften des Aggregatelagers nicht nennenswert zu verändern.
Auch ist die "Impulshöhe" entscheidend. Um die erfindungsgemäße Wirkung zu erzielen, ist eine Erhöhung bzw. Absenkung der Federrate des Aggregatelagers um mindestens den Faktor 5 erforderlich. Bevorzugt wird ein Federratenverhältnis von ca. 1 zu 10 angestrebt.

Die Veränderung der Federrate kann sowohl im Sinne einer Verhärtung des Aggregatelagers als auch einer Herabsetzung seiner Federrate für die Dauer des Störimpulses erfolgen. Bevorzugt erfolgt eine Verhärtung des Lagers, da zur optimalen Isolation der von dem Aggregat erzeugten Vibrationen das Aggregatelager in seinem Ausgangszustand grundsätzlich eine geringe Steifigkeit aufweist. Die Steifigkeit des Aggregatelagers kann z. B. durch ein magnetorheologisches Fluid verändert werden.

Die Verstimmung erfolgt fortlaufend mit einer Frequenz, die größer oder gleich der Eigenfrequenz des unverstimmten Systems aus Aggregat, Lager und Fundament ist (Anspruch 2). Damit ist sichergestellt, daß während jeder Schwingungsperiode der Eigenschwingung des Aggregates wenigstens ein Störimpuls erfolgt.

Durch das Verfahren gemäß Anspruch 3 werden die Verstellkräfte gering gehalten. Außerdem wird hierdurch ein Zwischenspeichern von potentieller Energie und ein Auswandern der Nullage der Kennlinie des Aggregatelagers verhindert.

Alternativ zur periodischen Verstimmung des Aggregatelagers in Abhängigkeit von der Eigenschwingung des Aggregates kann das Lager auch periodisch mit der Frequenz der vom Aggregat erzeugten Schwingungen verstimmt werden (Anspruch 4). Hierdurch wird das Dämpfungsverhalten des Aggregatelagers hinsichtlich seiner eigentlichen Auslegung möglichst gering beeinflußt.

Hierbei ist es gemäß Anspruch 5 besonders vorteilhaft, die Federrate im Bereich der Nulldurchgänge der vom Aggregat erzeugten Schwingungen zu erhöhen, um eine minimale Rückwirkung des Aggregatelagers auf die umgebende Struktur zu erzielen und somit die akustischen Qualitäten des Aggregatelagers nicht nennenswert zu beeinträchtigen, wie es bei einer Verhärtung des Lagers bei entsprechend großen Schwingungsamplituden der vom Aggregat erzeugten Schwingungen der Fall wäre.

Die Störimpulse können auch stochastisch eingebracht werden (Anspruch 6), wobei die Dichte der Impulsfolge so zu bemessen ist, daß in nahezu jede Schwingperiode der Aggregateschwingung wenigstens ein Störimpuls fällt.

Anspruch 7 beschreibt einen bevorzugten Anwendungsfall der Erfindung. Das Aggregatelager ist hier als Motorlager in einem Kraftfahrzeug ausgebildet und zur Isolation der freien Gas- und Massenkräfte des Motors, in der Regel einer Brennkraftmaschine, entsprechend weich ausgelegt. Neben diesen motorbedingten Vibrationen führt der Motor auch niederfrequente Bewegungen (Stuckerschwingungen) mit der Eigenfrequenz der Motorlagerung (ca. 5 bis 15 Hz) aus, die beispielsweise auf Fahrbahnanregungen zurückgehen. Durch das erfindungsgemäße Verfahren der Erzeugung von Störimpulsen kann wirkungsvoll der Ausbildung von Stuckerschwingungen entgegengewirkt werden.

Zu einer an die Drehzahl des Motors gekoppelten periodischen Verstimmung des Motorlagers sind Sensoren am Antriebsaggregat (Motor und/oder Getriebe) sowie Sensoren an der Karosserie des Kraftfahrzeuges vorgesehen, die die Beschleunigungswerte der jeweiligen Komponenten erfassen. Durch Auswertung der Beschleunigungssignale werden Stuckerbewegungen des Antriebsaggregates erkannt und gegebenenfalls ein entsprechender Algorithmus in Gang gesetzt, der das oder die Aggregatelager verstimmt. Die Verstimmung erfolgt hierbei bevorzugt periodisch in Abhängigkeit von der Drehzahl des Antriebsaggregates (z. B. gekoppelt an die Rotation der Kurbelwelle der Brennkraftmaschine). Daneben ist aber auch eine stochastische Verstimmung möglich.

Außerdem kann das erfindungsgemäße Verfahren "vorausschauend" angewandt werden, indem bei entsprechenden Betriebszuständen des Fahrzeugs, die die Entstehung von Stuckerschwingungen mit einer bestimmten Wahrscheinlichkeit erwarten lassen, die Aggregatelager prophylaktisch impulsartig verstimmt werden.

Das zuletzt anhand des Antriebsaggregates eines Kraftfahrzeuges beschriebene Verfahren kann selbstverständlich auch auf andere Anwendungsfälle sinngemäß angewandt werden.

Das erfindungsgemäße Verfahren ist nachfolgend in der Zeichnung anhand möglicher Abläufe dargestellt und näher erläutert. Es zeigt:
- Figur 1: eine schematische Darstellung eines Aggregates, das mittels einer Feder mit veränderbarer Federrate gelagert ist,
- Figur 2: den Schwingungsverlauf der Eigenschwingung des Aggregates von Figur 1 sowie den zeitlich daran gekoppelten Verlauf der Federrate des Lagers von Figur 1,
- Figur 3: eine der Figur 2 entsprechende Darstellung, wobei zusätzlich der Verlauf der von dem Aggregat erzeugten Schwingungen abgebildet ist,
- Figur 4: in schematischer Darstellung die Anordnung des Antriebsaggregates in einem Kraftfahrzeug und
- Figur 5: ein Blockschaltbild zur erfindungsgemäßen Ansteuerung der Lager des Antriebsaggregates eines Kraftfahrzeuges.

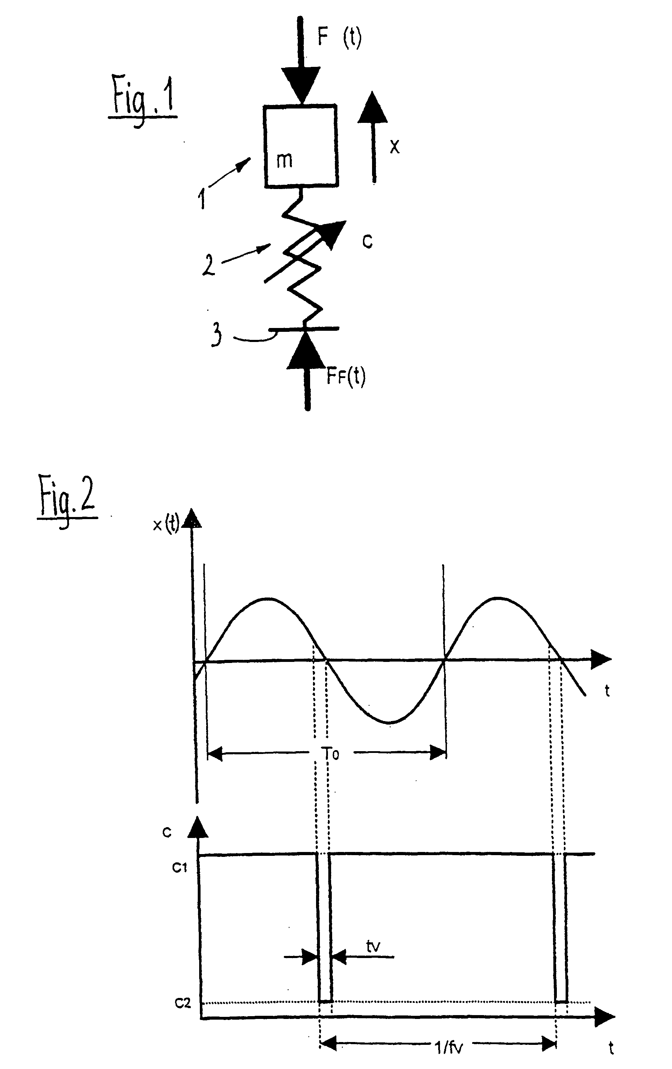

Figur 1 zeigt ein Aggregat 1 mit einer Masse m, das über ein Lager 2 mit einer veränderlichen Federrate c an eine Umgebung 3 angebunden ist. Das Aggregat 1 kann aufgrund der Nachgiebigkeit des Lagers 2 in Richtung des Pfeils x Bewegungen ausführen. Das Aggregat 1, beispielsweise die Brennkraftmaschine eines Kraftfahrzeuges, erzeugt einen periodischen Kraftverlauf F(t). Zudem wirkt auf das Aggregat 1 eine äußere Kraft F_{F}(t) ein.

In Figur 2 ist der Verlauf x (t) der Schwingbewegung dargestellt, die durch die Kraft F_{F} erzeugt wird. Hierbei handelt es sich um eine Schwingung mit der Eigenfrequenz f₀ = 1/T₀ des Systems aus Aggregat 1 und elastischer Lagerung 2. Erfindungsgemäß wird die Federrate c der Lagerung 2 periodisch mit der Schwingung des Aggregates 1 derart verändert, daß jeweils für eine kurze Zeitdauer tᵥ die Federrate von ihrem Ausgangswert c₁ auf einen Wert c₂ herabgesetzt wird. Die Verstelldauer tᵥ beträgt hierbei ca. 0,1 x 1/fᵥ (mit fᵥ = f₀), bei einem Verhältnis der beiden Federraten c₁/c₂ von ca. 10/1. Wie aus der Darstellung der Figur 2 hervorgeht, erfolgt die Rückstellung des Aggregatelagers 2 in Richtung "hart" beim Nulldurchgang der Schwingung x(t), um die Verstellkräfte gering zu halten.

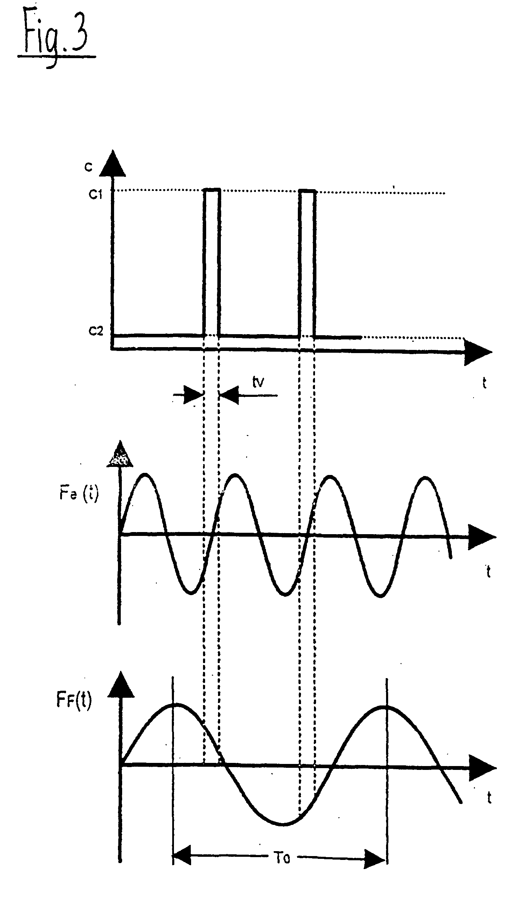

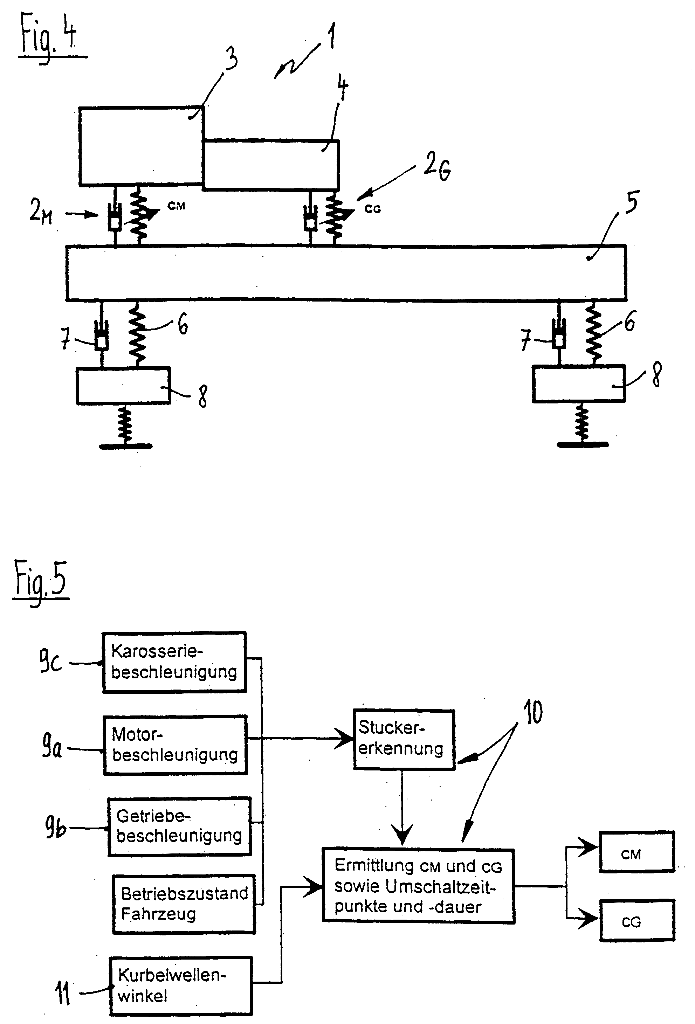

Alternativ zu dem in Figur 2 beschriebenen Verstell-Algorithmus ist gemäß Figur 3 die Verstimmung des Lagers 2 an die vom Aggregat 1 erzeugten Schwingungen gebunden. Hierbei erfolgt jeweils im Bereich der Nulldurchgänge der vom Aggregat 1 erzeugten Schwingungen Fe(t) eine Erhöhung der Federsteifigkeit vom Ausgangswert c₂ auf den Wert c₁. Durch die zeitliche Lage der "Störimpulse" ist sichergestellt, daß die Eigenschaften des Lagers 2 hinsichtlich seiner eigentlichen Aufgabe, der Unterdrückung der vom Aggregat 1 erzeugten Vibrationen, nicht nennenswert beeinträchtigt werden. Die Störimpulse erfolgen periodisch zu jeweils unterschiedlichen Zeitpunkten der niederfrequenten Eigenschwingung des Aggregates 1.

Figur 4 zeigt die Lagerung eines Antriebsaggregates 1, das sich aus einem Motor 3 und einem Getriebe 4 zusammensetzt. Das Antriebsaggregat 1 ist über Aggregatelager 2_{M} und 2_{G} gegenüber einer Karosserie 5 gelagert. Die Karosserie 5 ist ihrerseits über Federn 6 und Dämpfer 7 gegenüber Rädern 8 aufgehängt. Die Aggregatelager 2_{M} und 2_{G} weisen eine veränderliche Federrate auf.

Figur 5 veranschaulicht den Algorithmus zur impulsartigen Verstimmung der Aggregatelager 2_{M} und 2_{G} Über Beschleunigungssensoren 9a bis 9c werden die Schwingungen von Motor 3, Getriebe 4 und Karosserie 5 erfaßt. Zusammen mit weiteren Parametern, die einen Rückschluß auf den Betriebszustand des Kraftfahrzeuges zulassen (z. B. Kurvenfahrt, Anfahren, Abbremsen etc.), wird in einem Steuergerät 10 erkannt, ob eine Stuckerschwingung des Antriebsaggregates 2 vorliegt. Das Steuergerät 10 steuert nunmehr die Aggregatelager 2_{M} und 2_{G} an und verändert deren Federrate c_{M} und c_{G}. Hierbei werden die Umschaltzeitpunkte und die Umschaltdauer ermittelt. Bevorzugt erfolgt die impulsartige Veränderung der Federraten C_{M} und c_{G} hierbei synchron mit der Drehzahl des Motors 3, was durch einen entsprechenden Impulsgeber 11 beispielsweise an der Kurbelwelle gesteuert wird.

## Patentansprüche

1. Verfahren zur Ansteuerung eines Aggregatelagers, dessen Federrate vorrangig auf die Unterdrückung der vom Aggregat erzeugten Schwingungen abgestimmt ist, mit einer Einrichtung zur Veränderung der Federrate,
**dadurch gekennzeichnet, daß** zur Verhinderung des Einschwingens einer niederfrequenten Eigenschwingung des Aggregats (1) die Federrate (c) während einer Zeitdauer, die höchstens ein Fünftel der Schwingungsdauer (T₀) der Eigenschwingung des Aggregates (1) entspricht, um mindestens den Faktor 5 verändert wird.

2. Verfahren nach Anspruch 1,
**dadurch gekennzeichnet, daß** die Veränderung der Federrate (c) periodisch mit der Frequenz (f₀) der Eigenschwingung des Aggregates (1) erfolgt.

3. Verfahren nach Anspruch 2,
**dadurch gekennzeichnet, daß** die Verstellung der Federrate (c) in Richtung "hart" bei einem Nulldurchgang der Eigenschwingung des Aggregates (1) erfolgt.

4. Verfahren nach Anspruch 1,
**dadurch gekennzeichnet, daß** die Veränderung der Federrate (c) periodisch mit der Frequenz der von dem Aggregat (1) erzeugten Schwingungen erfolgt.

5. Verfahren nach Anspruch 4,
**dadurch gekennzeichnet, daß** jeweils im Bereich der Nulldurchgänge der von dem Aggregat (1) erzeugten Schwingungen die Federrate (c) des Aggregatelagers (2) erhöht wird.

6. Verfahren nach Anspruch 1,
**dadurch gekennzeichnet, daß** die Veränderung der Federrate (c) stochastisch erfolgt.

7. Verfahren nach einem der vorgenannten Ansprüche zur Verhinderung des Einschwingens einer niederirequenten Eigenschwingung (Stuckerschwingung) des Antriebsaggregates (1) eines Kraftfahrzeuges.

8. Verfahren nach Anspruch 7,
**dadurch gekennzeichnet, daß** mittels Beschleunigungssensoren am Antriebsaggregat (1) und an der Karosserie (5) des Kraftfahrzeuges das Auftreten von Stuckerschwingungen erkannt wird und die Verstellung der Federrate (c) der Aggregatelager (2_{M}, 2_{G}) periodisch in Abhängigkeit vom Arbeitstakt des Antriebsaggregates (1) erfolgt.

## Claims

1. A method for the control of an engine support, whose spring rate is primarily tuned to suppress the vibrations generated by the engine, with a device for varying the spring rate,
**characterised in that** to prevent the build up of a low frequency natural vibration of the engine (1) the spring rate (c) is varied by at least a factor of 5 during a period of time which corresponds at the highest to a fifth of the period of the frequency (T₀) of the natural vibration of the engine (1).

2. A method according to Claim 1,
**characterised in that** the variation of the spring rate (c) occurs periodically with the frequency (f₀) of the natural vibration of the engine (1).

3. A method according to Claim 2,
**characterised in that** the detuning of the spring rate (c) occurs in the "hard" direction at a null crossing of the natural vibration of the engine (1).

4. A method according to Claim 1,
**characterised in that** the variation of the spring rate (c) occurs periodically at the frequency of the vibrations generated by the engine (1).

5. A method according to Claim 4,
**characterised in that** the spring rate (c) of the engine support (2) is increased in each case in the region of the null crossings of the vibrations generated by the engine (1).

6. A method according to Claim 1,
**characterised in that** the variation of the spring rate (c) occurs stochastically.

7. A method according to one of the foregoing claims for the prevention of the onset of a low frequency natural vibration (stutter vibration) of the engine (12) of a motor vehicle.

8. A method according to Claim 7,
**characterised in that** the onset of stutter vibrations is recognised by means of sensors on the engine (1) and on the bodywork (5) of the motor vehicle and the detuning of the spring rate (c) of the engine supports (2_{M}, 2_{G}) is effected periodically in dependency on the working speed of the engine (1).

## Revendications

1. Procédé de commande d'un support de groupe dont le coefficient de ressorts est accordé principalement pour éliminer les oscillations générées par le groupe, comprenant une installation pour modifier le coefficient de ressorts,
**caractérisé en ce que**
pour éviter la mise en oscillations propres basse fréquence du groupe (1), on modifie le coefficient de ressorts (c) pendant une durée qui représente au maximum un cinquième de la durée (T₀) de l'oscillation propre du groupe (1), selon une modification d'au moins un coefficient 5.

2. Procédé selon la revendication 1,
**caractérisé en ce qu'**
on modifie le coefficient de ressorts (c) périodiquement à la fréquence (f₀) de l'oscillation propre du groupe (1).

3. Procédé selon la revendication 2,
**caractérisé en ce qu'**
on règle le coefficient de ressorts (c) dans le sens « dur » lors d'un passage à zéro de l'oscillation propre du groupe (1).

4. Procédé selon la revendication 1,
**caractérisé en ce qu'**
on modifie le coefficient de ressorts (c) périodiquement à la fréquence des oscillations engendrées par le groupe (1).

5. Procédé selon la revendication 4,
**caractérisé en ce que**
chaque fois dans la zone des passages par zéro des oscillations générées par le groupe (1), on augmente le coefficient de ressorts (c) du support de groupe (2).

6. Procédé selon la revendication 1,
**caractérisé en ce qu'**
on modifie le coefficient de ressorts (c) de manière stochastrique.

7. Procédé selon l'une quelconque des revendications précédentes pour éviter la mise en oscillations propres d'une oscillation propre basse fréquence du groupe d'entraînement (1) d'un véhicule.

8. Procédé selon la revendication 7,
**caractérisé en ce qu'**
à l'aide de capteurs d'accélération équipant le groupe d'entraînement (1) et la carrosserie (5) du véhicule, on détecte la création d'oscillations de carrosserie et on règle le coefficient de ressorts (c) du palier de groupe (2_{M}, 2_{G}) périodiquement suivant la cadence de travail du groupe d'entraînement (1).
